# EUROPEAN PATENT APPLICATION

(11) **EP 2 267 599 A1**
(43) Date of publication of application: **29.12.2010**
(21) Application number: 10250645.8
(22) Date of filing: 30.03.2010
(51) Int. Cl.: G06F 11/07

(54) **System and method to view crash dump information using a 2-D barcode**

(30) Priority: 22.06.2009 US 456726
(71) Applicant: Intel Corporation, Santa Clara, CA 95052 (US)
(72) Inventor: Anvin, Peter H., San Jose California 95052 (US); Hohndel, Dirk, Portland Oregon 97219 (US)
(74) Representative: Beresford, Keith Denis Lewis

(57) **Abstract**

In some embodiments, the invention involves a system and method for the generation and use of a compact crash dump that can be viewed and/or captured as a two-dimensional (2-D) high contrast graphical barcode. When an error is detected, machine context and other relevant information is formatted for entry to a barcode generator unit. The barcode generator unit received formatted text or codes, and outputs a 2-D barcode for visible capture. The barcode image is ultimately transformed into an electronic image which may be sent to an error reporting site, or individual. The error reporting site uses a decoding unit to decode the high contrast graphical image of the 2-D barcode. The resulting decoded information provides an analyst, or automated system with information relevant to debugging the error. Other embodiments are described and claimed.

## Description

### FIELD OF THE INVENTION

An embodiment of the present invention relates generally to errors reporting in computing systems and, more specifically, to the generation of a compact crash dump that can be displayed and captured as a two-dimensional (2-D) barcode.

### BACKGROUND INFORMATION

When an operating system or other low-level software crashes, it is highly desirable to capture at least the core machine state so that a bug report can be filed with the vendor or maintainer of the software. An accurate bug report is necessary to properly diagnose the system problem.

Various mechanisms exist for capturing and displaying information regarding runtime errors in a computing system. When a crash is not permanent or less severe, crash dump information may be commonly captured in machine readable form and forwarded to an analyst, or saved for later analysis. For more severe errors, this may not be possible. Often, crash or error information is displayed in a human readable form, such as plain alphanumeric text, as the system is shutting down, for instance. This information can be voluminous and data can indecipherable by laypersons. In existing systems, the user must manually copy the error codes and forward them to an administrator of technical support personnel for debugging. Manual copying of this magnitude is prone to error; even minimal errors in this information can cause the crash information to be unusable. Some users have been known to photograph the screen or monitor displaying the crash dump information, rather than copying the codes, and then forwarding the information on, for analysis. However, these photographs are often labor-intensive to process, or too poor quality to be useful.

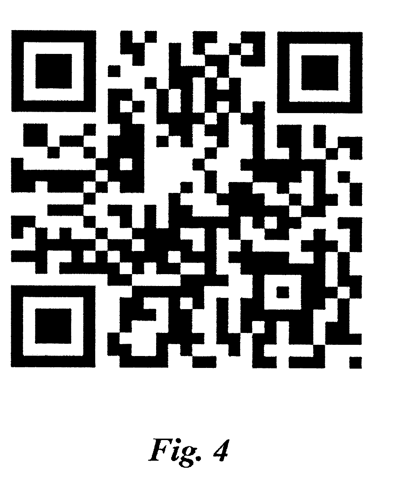

One and two-dimensional (1-D and 2-D) barcodes are being used in other fields. For instance, UPC (universal product code) barcodes are used to identify a product for scanning at a grocery store. The U.S. Postal Service uses 1-D barcodes to encode zip codes on letters. United Parcel Service (UPS) uses 2-D barcodes to identify an address for shipment. 2-D barcodes have been combined with cell phone camera technology in Japan, as an advertising ploy. A *Q*R *Code*®-compatible barcode representing Web addresses and URLs may appear in advertising on magazines, on signs, buses, business cards or just about any object that a user might want more information. Users with a camera phone equipped with the correct reader software scan the image of the *QR Code*® causing the phone's browser to launch and redirect to the programmed URL. Figure 4 shows an example of a *QR Code®* encoded barcode which represents a home page for the Wikipedia website.

### BRIEF DESCRIPTION OF THE DRAWINGS

The features and advantages of the present invention will become apparent from the following detailed description of the present invention in which:

Figure 1 is a block diagram of a system, such as a user might operate in embodiments of the invention;

Figure 2 is a block diagram illustrating a system for generating and utilizing two-dimensional (2-D) barcodes to assist in error reporting and analysis, according to an embodiment of the invention;

Figure 3 is a flow diagram illustrating a method for using 2-D barcodes to report errors, according to an embodiment of the invention; and

Figure 4 illustrates a *QR Code*® encoded barcode which represents a home page for the Wikipedia website.

### DETAILED DESCRIPTION

An embodiment of the present invention is a system and method relating to the generation and use of a compact crash dump that can be viewed and/or captured as a two-dimensional (2-D) barcode. In at least one embodiment, the present invention is intended to utilize a 2-D barcode rather than plain text or codes to indicate which errors have occurred. A 2-D barcode is not inherently more resilient to errors. The QR code standard, for instance, includes error correction information to be embedded within the barcode. When encoded with sufficient error correction information, the 2-D barcode is less prone to transcription errors than a manual copy. With sufficient error correction information, the 2-D barcode may be photographed at fairly low resolution, such as with cameras coupled to mobile devices (for instance, cellular telephones), and be accurately decoded. Moreover, the 2-D barcodes may contain more information on one screen display than available using alphanumeric text on the same size screen.

Reference in the specification to "one embodiment" or "an embodiment" of the present invention means that a particular feature, structure or characteristic described in connection with the embodiment is included in at least one embodiment of the present invention. Thus, the appearances of the phrase "in one embodiment" appearing in various places throughout the specification are not necessarily all referring to the same embodiment.

For purposes of explanation, specific configurations and details are set forth in order to provide a thorough understanding of the present invention. However, it will be apparent to one of ordinary skill in the art that embodiments of the present invention may be practiced without the specific details presented herein. Furthermore, well-known features may be omitted or simplified in order not to obscure the present invention. Various examples may be given throughout this description. These are merely descriptions of specific embodiments of the invention. The scope of the invention is not limited to the examples given.

In an embodiment of the invention, instead of displaying the dump information in the form of human-readable text, the dump information is displayed in the form of a so-called "2-D barcode." Reference herein to a "2-D barcode" means a high contrast graphical pattern specifically designed to be decoded by a computer. The barcode would typically be generated with error correction information. Because of the nature of the graphical pattern, high contrast, and error correction information, the 2-D barcode may be decoded even under less than perfect conditions. Such a pattern may be photographed and a computer program can extract the relevant information from the photograph even under quite poor conditions.

The authors have implemented a prototype embodiment of the invention in an initial prototype using a 2D barcode standard called *Quick Response,* or "QR." It will be understood by those of skill in the art upon reading this disclosure that a number of other 2D barcodes may already exist or could be developed that may be used without departing from the spirit of the disclosed subject matter.

Furthermore, a standard-sized screen may display significantly more information using a 2D barcode than if using human-readable text, even taking into the account the inefficiencies of the photographic capture process.

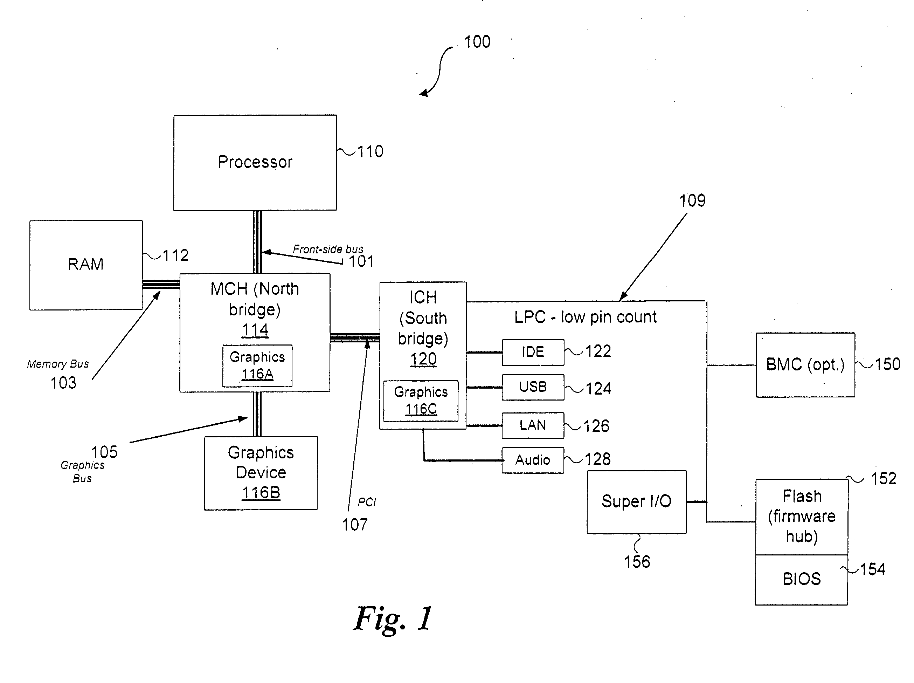

Referring now to Figure 1, there is shown a block diagram of a system 100, such as a user might operate in embodiments of the invention. In an embodiment, processor 110 may communicate with a memory controller hub (MCH) 114, also known as *North bridge,* via the front side bus 101. The MCH 114 communicates with system memory 112 via a memory bus 103. The MCH 114 may also communicate with a graphics device 116B via a graphics bus 105. The graphics card may be coupled to the processor via a system extension bus, PCI or PCI express bus, or the like. In some embodiments, a memory controller may be integrated with the processor (not shown). The MCH 114 may communicate with an I/O controller hub (ICH) 120, also known as *South bridge,* via a peripheral component interconnect (PCI) bus 107. In some embodiments, the graphics may be integrated with the MCH (116A) or with the ICH (116C). The ICH 120 may be coupled to one or more components such as PCI hard drives (not shown), legacy components such as IDE 122, USB 124, LAN 126 and Audio 128, and a Super I/O (SIO) controller 156 via a low pin count (LPC) bus 109. In some embodiments, the system may utilize an input/output hub (IOH) rather than an ICH.

Processor 110 may be any type of processor capable of executing software, such as a microprocessor, digital signal processor, microcontroller, or the like. Though Figure 1 shows only one such processor 110, there may be one or more processors in platform hardware 100 and one or more of the processors may include multiple threads, multiple cores, or the like.

Memory 112 may be a hard disk, a floppy disk, random access memory (RAM), read only memory (ROM), flash memory, or any other type of medium readable by processor 110. Memory 112 may store instructions for performing the execution of method embodiments of the present invention.

Non-volatile memory, such as Flash memory 152, may be coupled to the IO controller via a low pin count (LPC) bus 109. The basic input output system (BIOS) firmware 154 typically resides in the Flash memory 152 and boot up will execute instructions from the Flash, or firmware.

In some embodiments, platform 100 is a server enabling server management tasks. This platform embodiment may have a baseboard management controller (BMC) 150 coupled to the ICH 120 via the LPC 109. Other embodiments may utilize an embedded microprocessor, for instance, implementing Intel® Active Management Technology (iAMT), or vPro™ technology, in addition to, or in place of the BMC. In some embodiments, the embedded microprocessor may have independent connections to both power supply and a network interface device.

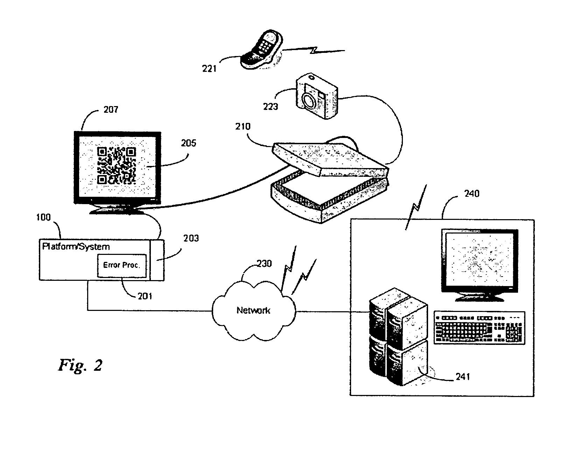

Figure 2 is a block diagram illustrating a system for generating and utilizing 2-D barcodes to assist in error processing/reporting and analysis, according to embodiments of the invention. A user operating a system 100, for instance, as described in Figure 1, may experience an error during processing. The platform is communicatively coupled to a monitor 207, or other display device, via a video interface chip or card 203. When an error occurs, such as an operating system crash, an error processing module 201 may execute on a processor in the platform 100.

The error processing routine condenses the most relevant pieces of machine state leading up to the error. Once the information is processed, it is sent to a 2-D barcode generator module running on platform 100. Once the barcode(s) 205 is/are generated, they are displayed on the display device 207.

In embodiments of the invention, the system 100 may typically not be connected to a network having personnel (analyst or programmer) who can debug the error. Or, even if normally connected to a network, the error may be severe enough not to allow the machine state and error information to be sent electronically to the analyst, or not even be able to be saved in non-volatile storage. Otherwise, an electronically formatted document could be sent over the network, and a barcode display might not be as useful. It is important to be able to send accurate information to the analyst so that the problem can be addressed.

In existing systems, users were forced to manually copy seemingly infinite strings of text to forward to the analyst. However, any manual transcription of a visual representation of the error is error prone for things like number twisting or 0/8/6 confusion, etc. Some clever, or efficient, users attempted to photograph their displays of crash dump information and forward the photo electronically to the analyst. However, this method of photographing is also extremely error prone, due to low resolution cameras (for instance, on cell phones or PDAs), or camera shake. Moreover, textual data captured in low resolution can often not be deciphered properly by the human eye, or optical character recognition software.

In embodiments of the invention, the user may use a digital camera 223 or camera coupled to a cell phone or other mobile device 221. The generated 2-D barcode is a high contrast graphic which lends itself extremely well to low resolution photography. Thus, when the photo image is sent to the analyst at workstation 240, it can be more accurately decoded.

In an embodiment, when a mobile device 221 having a wired or wireless communication interface is used, the image may be sent as an e-mail attachment directly to the analyst via a network 230, such as the global Internet. Other wireless transfer methods may be used depending on the device used. When the user has only a digital camera 223, the image may be printed (printer not shown) and then scanned using a scanner 210. Once scanned, an electronic photographic image of the 2-D barcode may be sent to the analyst via e-mail or other electronic means. When the error event is not permanent, a reboot of the system may reconnect the user to the network. In this case the barcode image may be uploaded to the computer and sent directly to the analyst in an e-mail, with no need for printing or scanning. It will be understood that the digital image may be uploaded to any computer which has a network connection for forwarding to the analyst, regardless of the permanence of the error. In an embodiment, the image may be sent via e-mail, uploaded to a server, web-site, bulletin board or placed in any other error reporting location available to the user and analyst. In another embodiment, the image may be sent directly to the analyst or reporting site or third party as printed matter. In this case, the printed matter is not scanned until it reaches the analyst or third party. The analyst or third party may upload the scanned image to the desired location accessible to a barcode decoder unit.

In another embodiment, an analog camera may be used. However, this requires the film to be developed. Some vendors may scan the negative and provide the user with electronic images of the photo, such as JPEG files. In another embodiment, the user will need to scan the printed film with the scanner 210 to create the electronic image. In another embodiment, the user may send the printed photograph to the analyst or third party as printed matter, as discussed above.

Depending on the severity of the error, the user's system 100 may or may not be available to utilize for scanning and electronic submission of the photograph. When the error is severe enough to prohibit the use of this faulty system 100, the scanner 210 may be connected to another system (not shown) which may be connected to a network for submission of the error report and 2-D barcode image.

Once the 2-D barcode image is received by the analyst, a decoding unit may be applied to decode the image so that the machine state and other contextual information may be analyzed. In an embodiment, the electronic representation of the 2-D barcode is stored on a system 241 and input to a 2-D barcode decoder module.

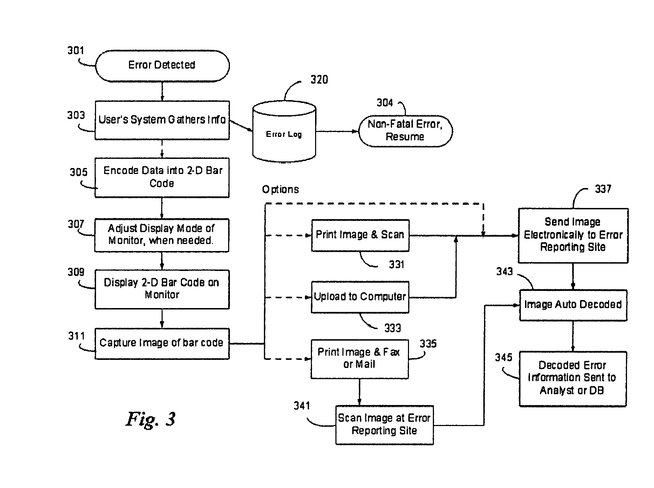

Figure 3 is a flow diagram illustrating a method for using 2-D barcodes to report errors, according to embodiments of the invention. The operating system executing on the platform (100) detects an error, in block 301. The system gathers error information, in block 303. Depending on the operating system, and severity of the error, the gathering may be performed by the operating system, system service, embedded microprocessor, or by other means. Non-fatal errors may be stored in a data store 320, in an error log, or the like, using normal runtime processes. The system may then resume in block 304, and the error log may be viewed at a later time. In an embodiment, it may be desirable to generate a 2-D barcode representation of the non-fatal error event and processing may continue at block 305.

If the error is fatal to the operating system, a firmware service may be required to gather or compile the information, in block 303. It will be understood that varying levels of context information may be accessible depending on the severity of the error or predetermined administrative policy. Once the information is collected, it may be encoded into a more compact format acceptable to a barcode generator. In an embodiment, error codes and information may be compacted into a "OR" format as defined in the standard ISO/IEC 18004:2006 document to be used to generate standardized 2-D barcode graphics. It will be understood that while the ISO standard defines input formats and the resulting barcode, the standard does not discuss the use of barcodes as disclosed herein. Other barcode generators may be used or developed, but the analyst must have access to the corresponding barcode decoding unit. The 2-D barcode is generated in block 305.

It will be understood that if the error is non-fatal, and the system 100 is still able to communicate with the network, that 2-D barcode generation may not be necessary to report the error. In that case, the raw error code information could be forwarded to the analyst via the network connection in any acceptable electronic (non-human readable) form. However, if the error requires a reboot, some contextual information may be lost, and the 2-D barcode is a means to save the contextual data before it is overwritten.

When the network is unavailable, other methods of reporting the error may be used. Upon experiencing an error event, the display mode of the monitor may be in an unknown state, or in text-only mode, when the error occurs. Thus, it is necessary to determine whether the monitor is in a proper display mode to graphically display the 2-D high contrast graphical barcode. The error collection/reporting module automatically adjusts the display mode of the monitor to be graphical mode. Depending on the system configuration, a query may be sent to the display device, a register may be monitored, or the firmware may automatically change the mode to graphical display regardless of the current mode, in block 307. Once the display mode is guaranteed, the 2-D barcode is displayed on the display device to be visibly accessible to a user, in block 309. In some embodiments, the monitor may also display textual and/or graphical instructions for the user, for instance, information on how to capture the image, or to whom it should be sent.

The 2-D barcode image is captured in block 311 and then sent to an error reporting site or person in block 337. A variety of forms of capture may be used, in block 311. In an embodiment, the user manually photographs the image with an imaging device, such as an analog or digital camera, or using a moving video capture device. A moving video capture device will be useful if the there is more than one barcode image. In some embodiments, the barcode images may scroll up or down the display monitor until all images are fully displayed. In the case where the system 100 is a server, or frequently left unattended, a stationary still or video camera may be positioned to point at the display monitor and capture the image. In an embodiment, a webcam coupled to another computing system may be used to capture the barcode image. Image capture may be automatically initiated by the system 100 firmware, or system software by an external monitoring device, or the imaging device may be permanently configured to the capture position for capturing periodic images of the display area. The stationary camera may be connected to a network directly or via another computing device. In an embodiment, the stationary camera may capture continuous or periodic still or video images which are continuously overwritten. In some cases, the capture device may be remotely movable such that it can point to various locations in the room, and thus a variety of display devices connected to various computing devices. The capture device may be coupled to an image processing and/or pattern recognition module which may automatically detect the display of a 2-D barcode image and then save the image rather than allowing it to be overwritten. In this case, the images may be sent automatically to the analyst after capture, in bloc 337. In another case, an administrator may be alerted to an error, and manually, or remotely position the camera for capture.

A more likely case is that the user of system 100 will manually capture the barcode image in block 311. When the user captures the image on, for instance, a wireless mobile device, such as a cell phone or PDA with an integrated camera, the image may be uploaded directly to the error reporting site, or sent directly to the analyst via en e-mail message, or the like, in block 337. It will be understood that any device having both an integrated camera and wired or wireless communication interface, either now known or to be developed in the future, may be used for the image capture and electronic transmission to the error reporting site.

In another embodiment, the user may not have communication device coupled directly to the camera. In this case, the image may be printed and scanned to create an electronic image, in block 331. It will be understood that once the 2-D barcode image is in electronic form, it may be printed, transferred or sent directly to the analyst, in block 337, in a wide variety of ways, depending on the capture, imaging, scanning and communication devices available to the user. The same user may, at different times, use a variety of different methods to report errors for the same system without departing from the scope of the disclosed subject matter.

In another embodiment, the display device may be a printer, rather than a video monitor. This may be useful for servers having no connected video display devices. In this case, the 2-D barcode image is printed directly to paper, or similar material, in block 311. This printed matter may then be scanned and transformed into an electronic image, in block 331, and then sent to the error reporting site, or individual, in block 337. The printed image may also be remotely viewed or electronically captured by a fixed image capture device, as discussed above. The ability to send the 2-D barcode image to a printer may be especially useful when no monitors are available, or are broken, and when the printer is connected via a USB port; the USB port may be operational even if a COM port or network printer is unavailable. In some rare cases, the user may opt to send the printed 2-D barcode image directly to the error reporting site by mail, facsimile, courier, or the like, in block 335. In this case, the printed image will be scanned by analyst or other third party, in block 341, to convert it to electronic form readable by a decoder unit. Facsimile transmission would not be possible for existing textual error code transcription methods because of the severe degradation of low resolution facsimile machines/transmissions. However, while perhaps a rare occurrence, sending a 2-D barcode via facsimile allows for accurate decoding by the recipient due to the high contrast and built in error correction codes in the graphic image.

In another embodiment, the user may capture the image on a digital camera device that has no integrated communication interface. In this case, the image file may be uploaded to a computer, or transferred to another wired or wireless network connected device via a memory card or USB cable, in block 333. Once the digital image is accessible to a network connected device, it may be sent electronically to the error reporting site, in block 337, without printing or scanning the image.

Once an electronic image is sent to the error reporting site, or responsible individual in block 337, the 2-D barcode image may be stored in a local or network accessible data store for future processing. An error analysis module may be executed automatically when a new error reported 2-D barcode is received, in block 343. In another embodiment, the analyst may manually execute an error analysis module to decipher the 2-D barcode into usable error information. Once deciphered, or decoded, the human-comprehensible error information may be sent directly to the analyst, in block 345, or be stored in a database for later analysis.

The techniques described herein are not limited to any particular hardware or software configuration; they may find applicability in any computing, consumer electronics, or processing environment. The techniques may be implemented in hardware, software, or a combination of the two.

For simulations, program code may represent hardware using a hardware description language or another functional description language which essentially provides a model of how designed hardware is expected to perform. Program code may be assembly or machine language, or data that may be compiled and/or interpreted. Furthermore, it is common in the art to speak of software, in one form or another as taking an action or causing a result. Such expressions are merely a shorthand way of stating execution of program code by a processing system which causes a processor to perform an action or produce a result.

Each program may be implemented in a high level procedural or object-oriented programming language to communicate with a processing system. However, programs may be implemented in assembly or machine language, if desired. In any case, the language may be compiled or interpreted.

Program instructions may be used to cause a general-purpose or special-purpose processing system that is programmed with the instructions to perform the operations described herein. Alternatively, the operations may be performed by specific hardware components that contain hardwired logic for performing the operations, or by any combination of programmed computer components and custom hardware components. The methods described herein may be provided as a computer program product that may include a machine accessible medium having stored thereon instructions that may be used to program a processing system or other electronic device to perform the methods.

Program code, or instructions, may be stored in, for example, volatile and/or non-volatile memory, such as storage devices and/or an associated machine readable or machine accessible medium including solid-state memory, hard-drives, floppy-disks, optical storage, tapes, flash memory, memory sticks, digital video disks, digital versatile discs (DVDs), etc., as well as more exotic mediums such as machine-accessible biological state preserving storage. A machine readable medium may include any mechanism for storing, transmitting, or receiving information in a form readable by a machine, and the medium may include a tangible medium through which electrical, optical, acoustical or other form of propagated signals or carrier wave encoding the program code may pass, such as antennas, optical fibers, communications interfaces, etc. Program code may be transmitted in the form of packets, serial data, parallel data, propagated signals, etc., and may be used in a compressed or encrypted format.

Program code may be implemented in programs executing on programmable machines such as mobile or stationary computers, personal digital assistants, set top boxes, cellular telephones and pagers, consumer electronics devices (including DVD players, personal video recorders, personal video players, satellite receivers, stereo receivers, cable TV receivers), and other electronic devices, each including a processor, volatile and/or non-volatile memory readable by the processor, at least one input device and/or one or more output devices. Program code may be applied to the data entered using the input device to perform the described embodiments and to generate output information. The output information may be applied to one or more output devices. One of ordinary skill in the art may appreciate that embodiments of the disclosed subject matter can be practiced with various computer system configurations, including multiprocessor or multiple-core processor systems, minicomputers, mainframe computers, as well as pervasive or miniature computers or processors that may be embedded into virtually any device. Embodiments of the disclosed subject matter can also be practiced in distributed computing environments where tasks or portions thereof may be performed by remote processing devices that are linked through a communications network.

Although operations may be described as a sequential process, some of the operations may in fact be performed in parallel, concurrently, and/or in a distributed environment, and with program code stored locally and/or remotely for access by single or multi-processor machines. In addition, in some embodiments the order of operations may be rearranged without departing from the spirit of the disclosed subject matter. Program code may be used by or in conjunction with embedded controllers.

While this invention has been described with reference to illustrative embodiments, this description is not intended to be construed in a limiting sense. Various modifications of the illustrative embodiments, as well as other embodiments of the invention, which are apparent to persons skilled in the art to which the invention pertains are deemed to lie within the spirit and scope of the invention.

The disclosure of this specification also includes the following numbered clauses, 1 to 20.
Clause 1. A system for error reporting using high contrast graphical information, comprising:
   a first computing device comprising error processing logic, wherein responsive to an error event in the first computing device, the error processing logic is configured to gather error information and format the error information into a pre-defined format, wherein the first computing device further comprises a barcode generator, the barcode generator configured to convert the formatted error information into a high contrast graphical image;
   a display device to receive the high contrast graphical image from the first computing device and to visibly display the high contrast graphical image;
   an image capture device to capture the visible image displayed on the display device; and
   transmission device for sending the visible image to an error reporting location for processing and decoding to allow an analyst to diagnose a cause of the error event.
Clause 2. The system as recited in clause 1, wherein the transmission device is coupled to the image capture device.
Clause 3. The system as recited in clause 1, wherein the image capture device is selected from the group of capture devices consisting of an analog camera, a digital camera, a digital camera coupled to the transmission device, a video camera configured to capture periodic frames of moving images, an audio/video device, a webcam, and a camcorder.
Clause 4. The system as recited in clause 1, wherein the display device comprises a printer.
Clause 5. The system as recited in clause 4, further comprising:
   a scanner configured to scan the printed high contrast graphical image and generate a machine readable image, the machine readable scanned image to be sent electronically to the error reporting location for analysis.
Clause 6. The system as recited in clause 4, further comprising a delivery system to allow the printed matter to be sent to the error reporting location.
Clause 7. The system as recited in clause 1, wherein the first computing device is configured to automatically adjust display settings of the display device to ensure that the display device is capable of displaying a graphical image before displaying the high contrast graphical image.
Clause 8. A system for error analysis, comprising:
   a second computing device comprising image decoder logic, the image decoder logic configured to decode a high contrast graphical image, the high contrast graphical image representing error information generated on a first computer responsive to an error event, the second computing device further configured to generate an error report based on information embedded in the graphical image, the error report to provide an error analyst/programmer with information to be used to determine a cause for the error event occurring on the first computer, wherein the graphical image is received either directly or indirectly from an operator of the first computing device.
Clause 9. The system as recited in clause 8, wherein the high contrast graphical image is received in electronic form.
Clause 10. The system as recited in clause 8, wherein the high contrast graphical image is received as printed matter, further comprising:
   a scanner configured to scan the printed matter and generate a machine readable image, the machine readable scanned image to be stored in a data store accessible to the second computing device, for retrieval by the image decoder logic.
Clause 11. A method for error reporting using high contrast graphical information, comprising:
   responsive to an error event, automatically gathering error information on a first computing device;
   formatting the error information into a pre-defined electronic format capable of being input to a two-dimensional bar code generator;
   generating a high contrast graphical image by the two-dimensional bar code generator; and
   displaying the high contrast graphical image on a display device.
Clause 12. The method as recited in clause 11, wherein the display device is a printer and displaying the high contrast graphical image comprises printing the image onto at least one page of printed matter, further comprising: sending the high contrast graphical image to an error reporting site.
Clause 13. The method as recited in clause 12, wherein the printed matter is sent to the error reporting location as printed matter via mail, common carrier delivery, private carrier, or courier.
Clause 14. The method as recited in clause 11, further comprising:
   capturing the displayed high contrast graphical image by an image capture device;
      and sending the captured image to an error reporting location.
Clause 15. The method as recited in clause 14, wherein the image capture device generates an electronic image, and sending the captured image comprises sending the electronic image via one of a wired or wireless communication interface.
Clause 16. The method as recited in clause 15, wherein the image capture device is coupled to a transmission device, the transmission device sends the electronic image.
Clause 17. The method as recited in clause 14, further comprising:
   after capturing the image, but before sending the image, printing the captured image on printed matter;
   scanning the printed matter to generate an electronic image, wherein sending the captured image comprises sending the electronic image.
Clause 18. A method for error analysis, comprising:
   receiving at an error reporting location, a high contrast graphical image representing error information, the error information generated responsive to an error event occurring on a first computer;
   decoding, by an image decoder, the high contrast graphical image to produce an error report based on information embedded in the graphical image, wherein the error report provides an error analyst/programmer with information to be used to determine a cause for the error event occurring on the first computer.
Clause 19. The method as recited in clause 18, wherein the high contrast graphical image is received in electronic form, further comprising storing the electronic image in a data store accessible the image decoder.
Clause 20. The method as recited in clause 19, wherein the high contrast graphical image is received as printed matter, further comprising:
   scanning the printed matter to generate a machine readable image; and
   storing the machine readable scanned image in a data store accessible the image decoder.

## Claims

1. A system for error reporting using high contrast graphical information, comprising:
a first computing device comprising error processing logic, wherein responsive to an error event in the first computing device, the error processing logic is configured to gather error information and format the error information into a pre-defined format, wherein the first computing device further comprises a barcode generator, the barcode generator configured to convert the formatted error information into a high contrast graphical image;
means for sending the high contrast graphical image to an error reporting location; and
a second computing device comprising image decoder logic, the image decoder logic to decode the high contrast graphical image and generate an error report based on information embedded in the graphical image, the error report to provide an error analyst/programmer with information to be used to determine a cause for the error event.

2. The system as recited in claim 1, wherein means for sending the high contrast graphical image further comprises:
a display device to receive the high contrast graphical image from the first computing device and to visibly display the high contrast graphical image;
an image capture device to capture the visible image; and
transmission device for sending the visible image to the error reporting location.

3. The system as recited in claim 2, wherein the image capture device is coupled to the transmission device comprising an electronic communication interface and is configured to format the captured image into a machine readable file to be sent to the error reporting location as one of an electronic mail attachment, an uploaded file to a data store accessible to the error reporting location, an electronic bulletin board or web site post, and other electronically communicated data file.

4. The system as recited in claim 2, wherein the image capture device is configured to transmit the visible image to an output device either directly, or via the first computing device, or a third computing device, wherein the output device is configured to print the visible image as a printed high contrast graphical image, further comprising:
a scanner configured to scan the printed contrast graphical image and generate a machine readable image, the machine readable scanned image to be sent electronically to the error reporting location for analysis.

5. The system as recited in claim 2, wherein the image capture device is selected from the group of capture devices consisting of an analog camera, a digital camera, a digital camera coupled to the transmission device, a video camera configured to capture periodic frames of moving images, an audio/video device, a webcam, and a camcorder.

6. The system as recited in claim 2, wherein the display device comprises a printer.

7. The system as recited in claim 2, wherein the display device comprises a video monitor.

8. The system as recited in claim 2, wherein the image capture device is configured to store the visible image in a data store, in electronic format, wherein the visible image is to be retrieved from the data store by either the first computing device or a third computing device configured to transmit the visible image to the error reporting location via the transmission device.

9. The system as recited in claim 2, wherein the image capture device is configured to store the visible image in a data store, in electronic format, wherein the visible image is to be retrieved from the data store by either the first computing device or a third computing device configured to transmit the visible image to an output device, wherein the output device is configured to print the visible image as a printed high contrast graphical image, further comprising:
a scanner configured to scan the printed high contrast graphical image and generate a machine readable image, the machine readable scanned image to be sent electronically to the error reporting location for analysis.

10. The system as recited in claim 1, wherein means for sending the high contrast graphical image further comprises:
a display device to receive the high contrast graphical image from the first computing device and to visibly display the high contrast graphical image, wherein the display device comprises a printer, and the high contrast graphical image is to be displayed directly on printed matter.

11. The system as recited in claim 10, further comprising a delivery system to allow the printed matter to be physically sent to the error reporting location.

12. The system as recited in claim 11, wherein means for sending the visible image to the error reporting location comprises sending the printed matter to the error reporting location by one of mail, common carrier delivery, private carrier, or courier, wherein the system further comprises:
a scanner configured to scan the printed matter and generate a machine readable image, the machine readable scanned image to be stored in a data store accessible to the second computing device.

13. The system as recited in claim 2, wherein the first computing device is configured to automatically adjust display settings of the display device to ensure that the display device is capable of displaying a graphical image before displaying the high contrast graphical image.

14. A method for error reporting using the system as claimed in any one of claims 1 to 13, comprising:
responsive to an error event, automatically gathering error information on a first computing device;
formatting the error information into a pre-defined electronic format capable of being input to a two-dimensional bar code generator;
generating a high contrast graphical image by the two-dimensional bar code generator; and
decoding the high contrast graphical image to generate an error report.
